(19) Europäisches Patentamt / European Patent Office / Office européen des brevets

(11) **EP 4 549 057 A1**

(12) **DEMANDE DE BREVET EUROPEEN**

(43) Date de publication:
07.05.2025 Bulletin 2025/19

(21) Numéro de dépôt: 24209608.9

(22) Date de dépôt: 29.10.2024

(51) Classification Internationale des Brevets (IPC):
*B22F 10/14* (2021.01)     *B22F 3/10* (2006.01)
*B22F 10/85* (2021.01)     *B22F 12/90* (2021.01)
*B33Y 10/00* (2015.01)     *B33Y 30/00* (2015.01)
*B33Y 50/02* (2015.01)

(52) Classification Coopérative des Brevets (CPC):
(C-Sets disponibles)
**B22F 12/90; B22F 10/14; B22F 10/85; B33Y 10/00; B33Y 30/00; B33Y 50/02;** B22F 3/1021; B22F 12/13
(Cont.)

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **30.10.2023 FR 2311801**

(71) Demandeurs:
• **Ecole Nationale Superieure des Mines de Paris**
**75006 Paris (FR)**
• **Association pour la Recherche et le Développement**
**des Méthodes et Processus Industriels "ARMINES"**
**75006 Paris (FR)**

• **JPB Système**
**77950 Montereau sur le Jard (FR)**

(72) Inventeurs:
• **SANGOUARD, Benjamin**
**75014 PARIS (FR)**
• **COLIN, Christophe**
**91000 EVRY (FR)**
• **DIOH, Emmanuel**
**77000 MELUN (FR)**
• **BADIN, Brieuc**
**77810 THOMERY (FR)**

(74) Mandataire: **Cabinet Beau de Loménie**
**158, rue de l'Université**
**75340 Paris Cedex 07 (FR)**

(54) **INSTALLATION ET PROCEDE DE FABRICATION ADDITIVE INDIRECTE**

(57) Installation (10) de fabrication additive indirecte par projection de liant (16) sur lit de poudre (14), comprenant un support (12), un moyen d'approvisionnement en poudre (32) configuré pour former des lits de poudre (14) successifs sur le support (12), une tête d'impression (18) configurée pour projeter sélectivement du liant (16) sur chacun des lits de poudre (14) successifs, et un dispositif de comptage (40) des gouttes de liant (16) projetées par la tête d'impression (18) sur les lits de poudre (14). Procédé de fabrication additive indirecte par projection de liant sur lit de poudre, comprenant la formation de lits de poudre (14) successifs sur un support, la projection sélective de liant (16) sur chacun des lits de poudre (14), le procédé comprenant en outre le comptage des gouttes de liant projetées.

[Fig.1]

**(Cont. page suivante)**

(52) Classification Coopérative des Brevets (CPC):
(Cont.)

C-Sets
B22F 2999/00, B22F 10/30, B22F 12/53;
B22F 2999/00, B22F 10/85, B22F 12/53;
B22F 2999/00, B22F 12/224, B22F 12/53,
B22F 12/90;
B22F 2999/00, B22F 12/90, B22F 12/53

**Description**

Domaine technique

Le présent exposé concerne le domaine de la fabrication additive, et plus particulièrement une installation et un procédé de fabrication additive indirecte par projection de liant sur lit de poudre. Une telle installation et un tel procédé peuvent être utilisés, en particulier mais de manière non exclusive, pour la fabrication additive de pièces aéronautiques et aérospatiales.

Technique antérieure

La fabrication additive correspond à l'ensemble des techniques qui permettent de fabriquer une pièce non par enlèvement de matière, mais par ajouts successifs de matière jusqu'à créer la forme de la pièce désirée. Ces techniques présentent de nombreux avantages, parmi lesquels la capacité à fabriquer des pièces qui ne pourraient pas être fabriquées par d'autres procédés.

Il existe différents procédés de fabrication additive, tels que la fusion laser de lits de poudre (en anglais *« Laser Powder Bed Fusion »,* LPBF), qui ont pour la plupart en commun une productivité relativement faible. Récemment s'est développée la fabrication additive indirecte par projection de liant sur lit de poudre (éventuellement sur poudre métallique, auquel cas on parle de MBJ - en anglais *« Metal Binder Jetting »*), qui présente une meilleure productivité que le LPBF.

En fabrication additive indirecte par projection de liant sur lit de poudre, on forme un lit de poudre sur un support, puis on projette un liant sur une surface de ce lit de poudre correspondant à une section de la pièce à fabriquer. Ce liant sèche au moins partiellement, puis un nouveau lit de poudre est déposé sur le lit de poudre précédent, et ainsi de suite jusqu'à reconstituer l'intégralité de la pièce à fabriquer. Ensuite, le liant est réticulé en un polymère solide afin d'assurer à la pièce, qui est alors dite « à vert », une tenue mécanique suffisante pour résister au dépoudrage, opération visant à retirer la poudre excédentaire de la pièce non liée par du polymère. Après dépoudrage, la pièce à vert est déliantée (le polymère en est retiré) puis frittée, ce qui permet d'obtenir la pièce finale.

L'impression du liant dans le lit de poudre, la réticulation du liant en un polymère et le frittage en une pièce dense induisent des changements de dimensions et de forme de la pièce au cours de sa fabrication. Ces changements rendent plus difficiles le respect de la géométrie de la pièce finale telle que spécifiée.

L'invention vise au moins à remédier en partie à ces inconvénients.

Exposé de l'invention

A cet effet, le présent exposé concerne une installation de fabrication additive indirecte par projection de liant sur lit de poudre, comprenant un support, un moyen d'approvisionnement en poudre configuré pour former des lits de poudre successifs sur le support, une tête d'impression configurée pour projeter sélectivement du liant sur chacun des lits de poudre successifs, et un dispositif de comptage des gouttes de liant projetées par la tête d'impression sur les lits de poudre.

L'installation de fabrication additive indirecte, ci-après plus simplement appelée installation, peut comprendre une ou plusieurs machines. Le support, pouvant prendre la forme d'un plateau de fabrication, est apte à supporter un premier lit de poudre, les lits de poudre suivants étant ensuite déposés les uns sur les autres.

Le moyen d'approvisionnement en poudre permet de former des lits de poudre successifs sur le support. Le moyen d'approvisionnement peut donc comprendre un ou plusieurs systèmes, notamment pour assurer la distribution de la poudre sur le support (ou sur le lit précédent), étaler cette poudre en couches appelées lits, et/ou compacter le lit de poudre.

Si nécessaire, l'installation peut comprendre un moyen de séchage configuré pour sécher partiellement ou totalement le liant. Par ailleurs, l'installation peut comprendre un moyen de réticulation du liant, qui peut être prévu sur la même machine que le support ou sur une autre machine de l'installation.

La tête d'impression peut comprendre une ou plusieurs buses. Chaque buse peut être configurée pour projeter du liant, goutte par goutte. Ainsi, par la suite et sauf mention contraire, les termes « projeter » et « imprimer » sont synonymes.

Le dispositif de comptage des gouttes de liant permet d'évaluer si une goutte a été réellement et effectivement projetée par la tête d'impression sur le lit de poudre.

Grâce au dispositif de comptage de gouttes, au-delà de la surface théorique sur laquelle la tête d'impression est censée projeter du liant, il est possible d'estimer plus précisément la surface réellement imprimée sur chaque lit de poudre, en particulier en bordure de la surface à imprimer, donc les dimensions de la pièce imprimée. On peut par ailleurs mesurer les dimensions de la pièce après réticulation du liant et après frittage. Ces données permettent donc de déterminer la transformation géométrique (potentiellement anisotrope) de la pièce qui s'opère lors de la réticulation et du frittage, et donc de pouvoir prévoir les dimensions à imprimer en fonction des dimensions souhaitées pour la pièce finale, indépendamment des informations fournies par le constructeur d'une installation particulière, pour des matériaux particuliers et pour des configurations particulières de l'installation. Il s'ensuit une meilleure maîtrise de la fabrication additive par projection de liant sur lit de poudre, mais également une productivité accrue. De plus, une meilleure connaissance de la saturation des lits de poudre en liant, potentiellement à l'échelle de chaque couche, grâce au nombre de gouttes projetées, permet d'optimiser le compromis souhaité entre le temps d'impression et la qualité de la pièce fabriquée. De ce point de vue également, la productivité du procédé est accrue.

Dans certains modes de réalisation, le dispositif de comptage est configuré pour déterminer le positionnement des gouttes de liant projetées par la tête d'impression sur les lits de poudre. Le positionnement d'une goutte désigne la position, sur un lit de poudre, à laquelle cette goutte a été imprimée. Le positionnement des gouttes peut donc être repéré par rapport au support, de manière directe ou indirecte, par exemple via la tête d'impression, la position de la tête d'impression par rapport au support étant connue par ailleurs. La prise en compte du positionnement réel des gouttes de liant projetées permet d'approcher la saturation locale du lit de poudre en liant plus précisément.

Dans certains modes de réalisation, le dispositif de comptage est configuré pour prendre en entrée un signal d'activation de la tête d'impression. Dans ces modes de réalisation, la tête d'impression est configurée pour projeter au moins une goutte de liant sous l'effet d'un signal d'activation.

En connaissant la quantité de gouttes projetées par la tête d'impression à chaque activation, le dispositif de comptage peut, à partir du nombre d'activations déterminé sur la base du signal d'activation reçu en entrée, estimer le nombre de gouttes projetées au total sur chaque lit de poudre. Bien que cette estimation puisse ne pas correspondre exactement au nombre de gouttes réellement projetées, typiquement lorsqu'une buse est bouchée, elle reste en général suffisamment bonne pour obtenir les avantages précités.

Dans certains modes de réalisation, le dispositif de comptage comprend un moyen optique configuré pour détecter optiquement le passage de gouttes entre la tête d'impression et le lit de poudre. Le moyen optique détecte le passage effectif de gouttes entre la tête d'impression et le lit de poudre ; en cela, il fournit une mesure très précise du nombre de gouttes réellement déposées, indépendamment de la réponse correcte ou non de la tête d'impression au signal d'activation ou d'un bouchage de buse. Par ailleurs, selon le moyen utilisé et son positionnement par rapport à la trajectoire des gouttes, le moyen optique peut être apte à fournir la position des gouttes qui sont passées ou non, ce qui permet d'identifier des buses défectueuses (par exemple, bouchées) sur la tête d'impression. Le moyen optique peut être fixe par rapport à la tête d'impression. Connaissant par ailleurs la position de la tête d'impression par rapport à la position du support, on peut remonter aux positions auxquelles les gouttes ont réellement été imprimées.

Un moyen optique est un moyen utilisant une onde électromagnétique, notamment plane ; les longueurs d'onde utilisables ne sont pas limitées au domaine visible, mais peuvent également couvrir l'infrarouge, l'ultraviolet, etc. Selon le moyen optique utilisé, le liant peut comprendre un colorant ou tout autre additif afin d'en améliorer la détectabilité par le moyen optique. Inversement, la longueur d'onde utilisée peut être sélectionnée en fonction du liant choisi.

Le moyen optique peut être configuré pour détecter le passage réel des gouttes en tout point de la surface à imprimer, par exemple par perturbation d'un signal optique émis et reçu par le moyen optique lors du passage d'une goutte.

Dans certains modes de réalisation, le dispositif de comptage est configuré pour corriger un comptage réalisé à partir d'un signal d'activation de la tête d'impression sur la base de la détection optique du passage des gouttes.

Dans certains modes de réalisation, le dispositif de comptage est configuré pour émettre un signal de bouchage, optionnellement d'une buse donnée, lorsque le nombre de gouttes effectivement projetées est inférieur au nombre de gouttes qui devraient être projetées sur la base du signal d'activation, et/ou lorsque le signal d'activation prévoit la projection d'une goutte par une buse donnée mais que ladite buse ne projette aucune goutte.

Dans certains modes de réalisation, le moyen optique comprend au moins l'un parmi une nappe laser, un scanner et un ensemble de diodes. Sur le principe, ces moyens fonctionnent en émettant un faisceau optique sur le trajet des gouttes, et en détectant la perturbation de ce faisceau lors du passage d'une goutte. La mesure de la perturbation peut permettre de remonter à la position de la goutte projetée.

En particulier, le moyen optique peut comprendre une pluralité de capteurs, lesdits capteurs étant agencés de sorte qu'une perturbation causée par la projection d'une goutte donnée ne soit détectée que par un seul capteur. Par exemple, les capteurs peuvent être isolés les uns des autres, notamment sur le plan optique. Par exemple, les capteurs optiques peuvent être agencés les uns à côté des autres, typiquement selon une rangée, de telle sorte que leur champ d'action comprenne une et une seule buse. Ainsi, il n'y a pas de chevauchement entre les différents capteurs. Chacun des capteurs peut comprendre un récepteur associé à un émetteur optique, par exemple un émetteur laser, placé en face du récepteur afin de détecter une goutte lors de l'interruption du faisceau optique.

Le dispositif de comptage peut avoir une fréquence de détection suffisante, par exemple supérieure à 5kHz, de préférence à 20kHz, afin de s'assurer du comptage de la goutte malgré la projection de la goutte à haute vitesse.

Dans certains modes de réalisation, l'installation de fabrication additive indirecte comprend en outre un nettoyeur de buse configuré pour nettoyer au moins une buse de la tête d'impression en fonction d'un signal de bouchage émis par le dispositif de comptage. Le signal de bouchage peut être émis comme détaillé précédemment. Le nettoyage des buses lorsque cela est nécessaire, en plus d'un éventuel nettoyage périodique, permet d'assurer une bonne reproductibilité de la fabrication d'une pièce à l'autre, donc une bonne qualité de fabrication. Le nettoyeur de buse peut nettoyer les buses par des procédés physiques (par exemple avec un racleur, typiquement de type essuie-glace) et/ou chimique (par exemple avec un produit nettoyant, par exemple un solvant du liant).

Dans certains modes de réalisation, l'installation de fabrication additive indirecte comprend une unité d'évaluation des dimensions d'une pièce imprimée par projection de liant en fonction du nombre de gouttes comptées voire, le cas échéant, du nombre de gouttes dont le passage est détecté.

L'unité d'évaluation peut aussi prendre en compte au moins l'une des grandeurs suivantes : le nombre de gouttes imprimées sur chaque couche, l'étalement des gouttes (par exemple sous la forme d'un coefficient d'étalement, notamment de sa valeur maximale), la ou les distance(s) séparant deux gouttes adjacentes dans les deux directions X et Y de la surface du lit de poudre, le débordement des gouttes périphériques par rapport au contour de la surface à imprimer théorique (pouvant être définie par un fichier de Conception Assistée par Ordinateur - CAO), l'épaisseur d'un lit de poudre, le nombre de lits de poudre, la porosité du lit de poudre, le type de poudre, le type de liant, le rapport entre la masse de poudre de la pièce réticulée et la masse de poudre de la pièce théorique (définie par CAO).

De manière plus générale, la surface imprimée est fonction du nombre de gouttes imprimées et d'un facteur d'étalement des gouttes, lié à la saturation choisie par l'opérateur, qui dépend elle-même de l'écartement entre deux gouttes consécutives dans chaque direction du plan d'une couche.

Par ailleurs, comme exposé précédemment, l'unité d'évaluation peut également calculer la transformation entre la pièce définie par CAO et la pièce réticulée, puis entre la pièce réticulée et celle frittée, ce qui permet donc d'améliorer la maîtrise dimensionnelle de la pièce par rapport aux spécifications finales.

Dans certains modes de réalisation, l'installation de fabrication additive indirecte comprend une unité de calcul de la saturation en liant du lit de poudre en fonction du nombre de gouttes comptées (voire, le cas échéant, du nombre de gouttes dont le passage est détecté), et optionnellement d'un coefficient d'étalement des gouttes.

A l'échelle du lit de poudre, la saturation, parfois appelée saturation « vraie », est le rapport entre le volume de liant projeté sur la surface à imprimer du lit de poudre et le volume de pores du volume infiltré par le liant de ce même lit de poudre. En d'autres termes, la saturation « vraie » est le volume de liant projeté divisé par le volume poreux qui est occupé partiellement ou totalement par le liant (c'est-à-dire abstraction faite de la zone non-infiltrée du lit de poudre, sur laquelle, par définition, n'est projetée aucun liant). Par exemple, abstraction faite de l'évaporation éventuelle des solvants du liant, si le liant remplit complètement les pores du volume infiltré du lit de poudre, la saturation « vraie » est de 100% et le volume infiltré est dit saturé. Si en revanche le volume infiltré présente des pores non entièrement remplis par le liant, la saturation « vraie » est inférieure à 100% et le volume infiltré est dit insaturé.

La saturation « vraie » peut être approchée par une saturation dite « corrigée », égale au nombre de gouttes déposées multiplié par le volume d'une goutte, le tout divisé par le produit de la porosité du lit de poudre et du volume infiltré du lit de poudre, dont la profondeur infiltrée peut ou non dépasser l'épaisseur du lit de poudre. Les constructeurs d'installations de fabrication additive indirecte définissent parfois une saturation estimée qui diffère de la saturation vraie et de la saturation corrigée car elle se fonde notamment sur l'hypothèse que le liant projeté pour une couche se répartit nécessairement sur et uniquement sur toute la profondeur de cette couche. Ainsi, la saturation estimée par le constructeur peut être supérieure à 100% dans la mesure où l'épaisseur de couche est inférieure à la profondeur infiltrée ou inférieure à 100%, dans le cas où l'épaisseur de couche est supérieure à la profondeur infiltrée. La profondeur infiltrée peut être estimée sur la base d'essais préalables.

La saturation « vraie » gouverne la tenue mécanique de la pièce réticulée, c'est pourquoi la connaître plus précisément, telle qu'approchée grâce à la saturation corrigée et au nombre de gouttes comptées (voire détectées), permet de mieux maîtriser les propriétés mécaniques de la pièce réticulée, notamment pour la résistance au dépoudrage et ce indépendamment de la saturation donnée par la machine.

Le présent exposé concerne également un procédé de fabrication additive indirecte par projection de liant sur lit de poudre, comprenant la formation de lits de poudre successifs sur un support, la projection sélective de liant sur chacun des lits de poudre, le procédé comprenant en outre le comptage des gouttes de liant projetées. Le procédé peut être mis en oeuvre par une installation telle que décrite précédemment.

En particulier, la formation de lits de poudre peut comprendre la dépose de poudre (c'est-à-dire le fait de déposer de la poudre), l'étalement en lits et la compaction de chaque lit de poudre.

Le procédé peut comprendre le séchage partiel ou total du ou des solvants du liant. Le procédé peut comprendre la réticulation du liant.

La projection sélective de liant peut être réalisée par une tête d'impression.

Dans certains modes de réalisation, le procédé comprend le réglage de la tête d'impression en fonction d'une saturation en liant du lit de poudre calculée en fonction du nombre de gouttes comptées voire, le cas échéant, en fonction du nombre de gouttes dont le passage est détecté. Cette saturation peut correspondre à la saturation corrigée mentionnée précédemment. Le réglage peut concerner le nombre de passes de la tête d'impression, la vitesse de passage de la tête d'impression, le volume des gouttes, ainsi que la fréquence d'activation des buses. La quantité de liant à déposer par la tête d'impression dépend aussi de l'épaisseur de couche sélectionnée pour cette impression. A saturation égale mais épaisseurs de couche différentes, les paramètres de réglage de la tête d'impression peuvent être sélectionnés pour déposer plus de liant par couche dans une couche relativement épaisse que dans une couche relativement fine. Grâce au fait que la tête d'impression est réglée en fonction de la saturation corrigée qui approche mieux la saturation « vraie » que la saturation estimée par le constructeur de la machine, le procédé de fabrication additive indirecte est mieux maîtrisé, de même que les propriétés mécaniques de la pièce réticulée.

Brève description des dessins

D'autres caractéristiques et avantages de l'objet du présent exposé ressortiront de la description suivante de modes de réalisation, donnés à titre d'exemples non limitatifs, en référence aux figures annexées.

La figure 1 illustre schématiquement les étapes d'un procédé de fabrication additive indirecte par projection de liant sur lit de poudre selon un mode de réalisation.

La figure 2 est un schéma, en vue de dessus, d'une installation de fabrication additive indirecte par projection de liant sur lit de poudre selon un mode de réalisation.

La figure 3 est un schéma-bloc illustrant l'architecture d'un dispositif de comptage de gouttes selon un mode de réalisation.

La figure 4 est un schéma, en vue de dessus, d'une installation de fabrication additive indirecte par projection de liant sur lit de poudre selon un mode de réalisation, en cours d'impression.

La figure 5 illustre, en vue de dessus, un modèle à quatre gouttes pour la détermination du taux de recouvrement et du coefficient d'étalement.

Description détaillée

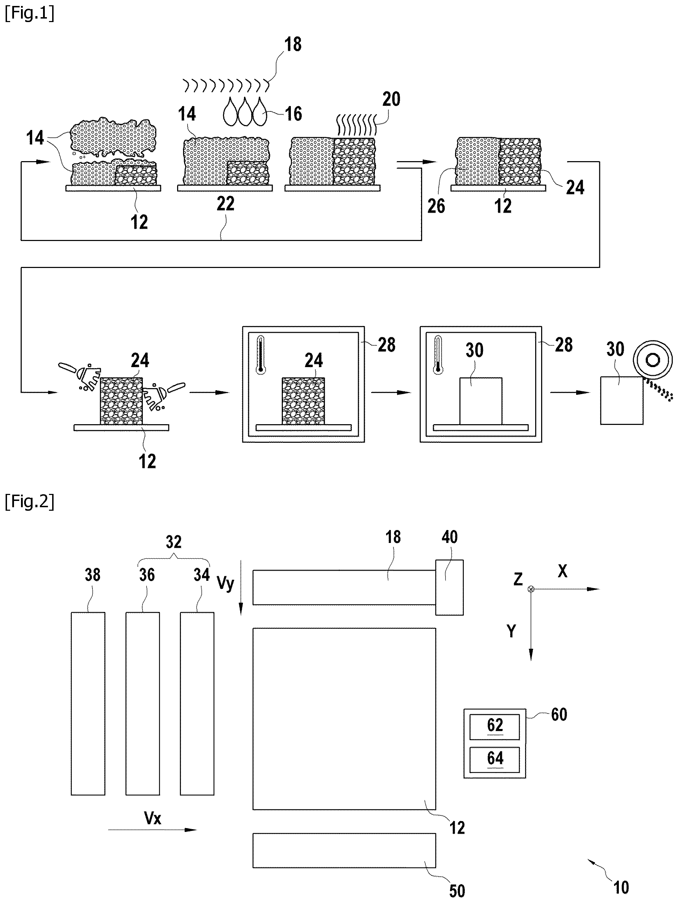

Le principe d'un procédé de fabrication additive indirecte par projection de liant sur lit de poudre est illustré sur la figure 1. Le procédé comprend la formation de lits de poudre 14 successifs sur un support 12. Chaque lit de poudre 14 est formé sur le lit de poudre précédent, sauf le premier lit de poudre qui peut être en contact direct avec le support 12.

La poudre peut être une poudre métallique, par exemple un alliage de Fer-Nickel tel que IN718 (Inconel, marque déposée, dont la composition est détaillée au tableau 1, à l'exception des impuretés inévitables). Toutefois, d'autres matériaux peuvent être envisagés, tels que l'acier inoxydable comme l'acier SS316L (dont la composition est détaillée au tableau 2, à l'exception des impuretés inévitables).

[Tableau 1]

| Eléments | C | Mn | P | S | Si | Cr | Ni | Mo |
|---|---|---|---|---|---|---|---|---|
| Min (% masse) | 0,02 | - | - | - | - | 17 | 50 | 2,8 |
| Max (% masse) | 0,08 | 0,35 | 0,015 | 0,015 | 0,35 | 21 | 55 | 3,3 |
| Eléments | B | Ti | Ta | Nb | Cu | Co | Al | Fe |
| Min (% masse) | - | 0,6 | - | 4,75 | - | - | 0,2 | - |
| Max (% masse) | 0,006 | 1,2 | 0,05 | 5,50 | 0,3 | 1 | 0,8 | Complément |

[Tableau 2]

| Eléments | C | Mn | P | S | Si | Cr | Ni | Mo |
|---|---|---|---|---|---|---|---|---|
| Min (% masse) | - | - | - | - | - | 16 | 9 | 1,5 |
| Max (% masse) | <0,03 | <2 | <0,01 | <0,005 | 1 | 19 | 13 | 3 |
| Eléments | N | O | Fe | | | | | |
| Min (% masse) | - | - | - | | | | | |
| Max (% masse) | <0,003 | <0,002 | Complément | | | | | |

Le procédé comprend également la projection sélective de liant sur chacun des lits de poudre 14. Ainsi, après formation d'un lit de poudre, un liant 16 est projeté sur ce lit de poudre 14, avant la formation d'un lit de poudre 14 suivant. Le liant 16 peut être projeté par une tête d'impression 18, par exemple sous forme de gouttes. La projection est dite sélective dans la mesure où la projection de liant 16 peut n'être pas faite sur tout le lit de poudre 14, mais uniquement sur une surface qu'on souhaite imprimer et qui correspond à une coupe de la pièce à fabriquer. Une telle surface peut être définie dans un fichier CAO.

Le liant 16 peut comprendre un ou plusieurs solvants et un ou plusieurs polymères en solution dans l'ensemble de ces solvants. Par exemple, le liant peut être un mélange d'eau, d'éthylène glycol et de 2-butoxyéthanol (3 solvants) avec du polyvinylpyrrolidone (1 polymère).

Le liant 16 s'infiltre dans le lit de poudre 14 et peut ensuite subir un séchage 20 naturel ou forcé, au cours duquel le liant, et notamment ses solvants, s'évapore en partie. Par exemple, la température de séchage peut être comprise entre 25°C et 70°C. Il est possible d'observer un temps de pause, par exemple de l'ordre de plusieurs secondes, entre l'infiltration du liant 16 et le début du séchage.

Comme schématisé par la flèche 22, ces étapes peuvent être répétées, un nouveau lit de poudre 14 étant déposé sur le lit de poudre qui a précédemment reçu du liant, jusqu'à ce que la forme de la pièce à fabriquer, ainsi construite couche par couche, soit entièrement imprimée.

Après l'impression de la pièce couche par couche, une étape de réticulation permet de réticuler le liant, par exemple de le polymériser. Il en résulte une pièce à vert 24 généralement monobloc, le reste de la poudre 26 restant quant à lui à l'état granulaire. Par exemple, la réticulation peut être effectuée à une température de 200°C pendant 12h, sous air. A l'issue de la réticulation, la pièce à vert 24 doit présenter une résistance à la rupture suffisamment élevée pour supporter les étapes suivantes. Par exemple, pour résister aux manipulations nécessaires au dépoudrage, il est préférable que la pièce à vert 24 ait une contrainte à rupture équivalente en flexion quatre points (essai standard) supérieure ou égale à 5, 6 ou 7 MPa, voire à 20, 21 ou 22 MPa pour des pièces ouvragées, sans quoi la pièce à vert 24 a de fortes chances de se détériorer lors du dépoudrage. L'expression « contrainte à rupture équivalente » est utilisée car la formule de calcul de la contrainte pour cet essai s'applique à des matériaux denses, ce qui n'est pas le cas des pièces à vert.

L'impression suivie de la réticulation du liant 16 peut induire un changement de volume de la pièce à vert 24 par rapport aux dimensions de la pièce définie par le fichier CAO. Le plus souvent, il s'agit d'une augmentation de volume dont l'origine est un gain de masse de poudre par rapport à celle de la pièce CAO, engendré par un débordement des gouttes hors des contours de la pièce.

La pièce à vert 24 subit ensuite un dépoudrage, qui peut être effectué de manière connue en soi, consistant à retirer de la pièce à vert 24 les restes de poudre 26 non imprimés. Par exemple, le dépoudrage peut être réalisé à l'aide d'une buse d'air comprimé (typiquement avec une pression maximale de 2 bar). Puis, la pièce à vert 24 est déliantée et frittée. Comme illustré sur la figure 1, le déliantage peut être effectué en plaçant la pièce à vert 24 dans un four 28. Le déliantage peut comprendre un traitement thermique de la pièce à vert 24 à une température plus élevée que la réticulation. Par exemple, le déliantage peut comprendre un maintien de la pièce à vert à environ 350°C pendant 10 à 15h. L'atmosphère dans le four 28 peut être une atmosphère inerte, par exemple d'argon, optionnellement complétée de dihydrogène (par exemple à hauteur de 5% volumique) ou une atmosphère oxydante sèche, par exemple de l'air synthétique demandant un cycle thermique adaptée à ce type d'atmosphère. De manière plus générale, la température dans le four 28 doit être supérieure à une borne inférieure assurant la disparition totale du liant (ou plus précisément du polymère) et inférieure à une borne supérieure qui ne génère pas d'oxydation significative de la pièce.

Après déliantage, la pièce dite brune peut être frittée, dans le même four 28 ou un four différent. Par exemple, le frittage peut être effectué à une température inférieure au solidus, par exemple de l'ordre de 1220°C pour l'Inconel 718 (marque déposée) dont le solidus est de 1250°C. L'atmosphère dans le four 28 peut être un vide secondaire (pression inférieure à $10^{-5}$ mbar) ou de l'argon additionné de 5% volumique de dihydrogène ou encore du dihydrogène pur. Des pièges à oxygène (getter) peuvent être présents dans le four 28, par exemple un alliage à base titane tel que le TA6V.

Le frittage permet d'effectuer une densification de la pièce brune pour obtenir la pièce finale 30. Du fait de cette densification, on observe à nouveau une variation de volume et donc un changement de dimension de la pièce 30 par rapport à la pièce à vert 24, et a fortiori par rapport à la pièce imprimée et la pièce définie par le fichier CAO.

La pièce finale 30 peut ensuite refroidir, par exemple dans le four 28 ou en dehors. Si nécessaire, la pièce finale 30 peut enfin être parachevée, comme le montre la dernière étape de la figure 1.

La figure 2 illustre plus particulièrement, en vue de dessus, une installation 10 de fabrication additive indirecte par projection de liant sur lit de poudre. L'installation 10 comprend un support 12 sur lequel des lits de poudre successifs 14 peuvent être formés. Le support 12 peut comprendre un plateau de fabrication. Le support 12 peut s'étendre globalement dans un plan XY. Par ailleurs, le support 12 peut coulisser dans une direction Z normale aux lits de poudre 14, donc ici au support 12 ; par exemple, le support 12 peut s'abaisser après chaque impression, afin d'accueillir un nouveau lit de poudre 14. Les directions X, Y et Z peuvent former un repère orthogonal.

Pour former les lits de poudre 14, l'installation 10 comprend un moyen d'approvisionnement en poudre 32. En l'espèce, le moyen d'approvisionnement en poudre 32 peut comprendre un moyen d'étalement 34 et un moyen de dépose 36. Le moyen de dépose 36, par exemple une trémie, est configurée pour déposer de la poudre sur le support 12, et le moyen d'étalement 34, par exemple un rouleau ou un racleur, est configuré pour étaler la poudre déposée et la compacter, dans le but d'avoir un lit de poudre 14 le plus homogène possible en densité et ayant une compacité souhaitée. La trémie peut être une trémie vibrante. Le rouleau peut être contrarotatif, c'est-à-dire être entraîné en rotation sur lui-même dans le sens inverse de sa translation par rapport à la mise en couche du lit de poudre 14.

L'installation 10 peut par ailleurs comprendre un moyen de séchage 38, par exemple une lampe à infrarouge, configuré pour sécher le liant 16 imprimé sur le lit de poudre 14. Le moyen de séchage 38, ou un autre moyen, peut être configuré pour maintenir le lit de poudre à une température supérieure à la température ambiante, par exemple entre 30°C et 60°C, de préférence entre 35° et 45°C.

Dans le présent mode de réalisation, le moyen d'étalement 34, le moyen de dépose 36 et le moyen de séchage 38 peuvent se déplacer par rapport au support 12 dans la direction X, à une vitesse Vx qui peut varier selon le moyen considéré.

L'installation 10 comprend par ailleurs une tête d'impression 18 configurée pour projeter sélectivement du liant 16 sur chacun des lits de poudre 14 successifs, comme exposé précédemment. A cette fin, la tête d'impression 18 comprend ici une pluralité de buses, chaque buse étant apte à être commandée par un signal d'activation et à former et projeter une goutte de liant 16 sur instruction du signal d'activation.

Par exemple, les buses de la tête d'impression 18 peuvent être de la famille des gouttes à la demande (en anglais *Drop on demand* ou DOD), et plus particulièrement de type piézoélectrique : ces buses ont un composant piézoélectrique qui se déforme sous le passage d'un courant et comprime le liquide, générant ainsi une goutte de liant. Alternativement, les buses peuvent être de type thermoélectrique, et comprennent dans ce cas un composant qui chauffe sous le passage d'un courant, afin de créer une bulle de vapeur dans la chambre du liant qui, lors de son éclatement, projettera une goutte de liant. D'autres types de buses peuvent encore être utilisés dans le cadre de l'installation 10.

Dans ce mode de réalisation, la tête d'impression 18 peut se déplacer par rapport au support 12 dans la direction Y, à une vitesse Vy.

L'installation 10 comprend également un dispositif de comptage 40 configuré pour compter les gouttes de liant 16 projetées par la tête d'impression 18 sur les lits de poudre 14. Le dispositif de comptage 40 peut être fixe par rapport à la tête d'impression 18, par exemple attaché à la tête d'impression 18.

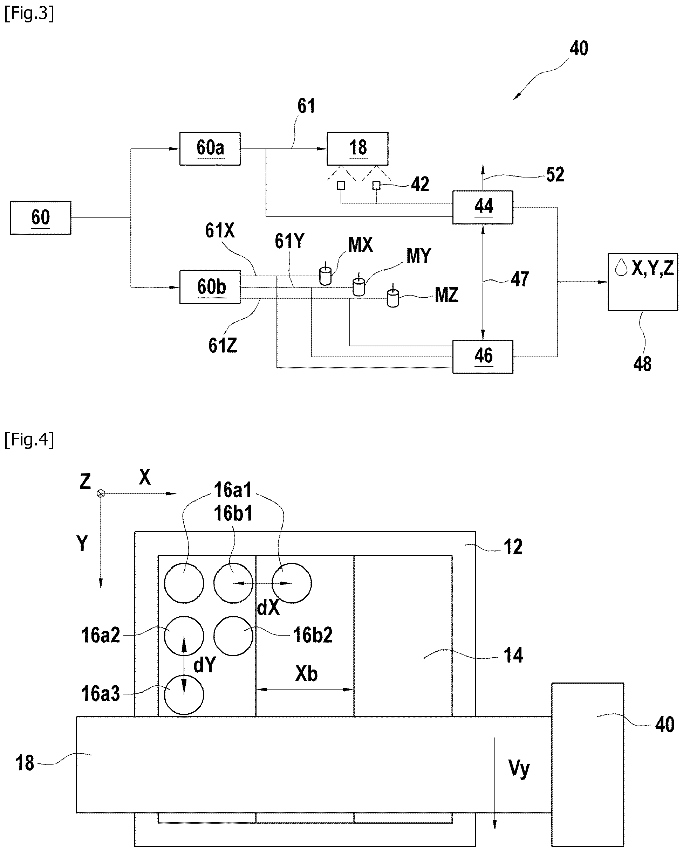

Le dispositif de comptage 40 est plus particulièrement illustré sur la figure 3. En particulier, dans ce mode de réalisation, le dispositif de comptage 40 comprend un moyen optique 42 configuré pour détecter optiquement le passage de gouttes entre la tête d'impression 18 et le lit de poudre 14. Dans l'exemple schématisé sur la figure 3, le moyen optique émet un ou plusieurs faisceaux optiques intersectant le trajet des gouttes projetées par la tête d'impression, et la perturbation du faisceau est mesurée par un détecteur 44. Une perturbation peut être interprétée comme le passage d'une goutte, tandis que l'absence de perturbation peut être interprétée comme l'absence de passage d'une goutte. La longueur d'onde du moyen optique peut être choisie pour détecter convenablement le liant, en fonction de la nature et de la composition du liant.

Dans ce mode de réalisation, le moyen optique 42 comprend une nappe laser, mais en variante ou en complément, le moyen optique pourrait comprendre un scanner, ou encore un ensemble de diodes.

Optionnellement, le dispositif de comptage 40 peut être configuré pour prendre en entrée un signal d'activation de la tête d'impression 18. En référence à nouveau à la figure 2, le signal d'activation de la tête d'impression 18 peut être émis par un contrôleur 60 configuré pour piloter l'installation 10. Le signal d'activation peut déterminer l'activation ou non de chacune des buses de la tête d'impression 18, en fonction de la position de la tête d'impression 18. Plus précisément, en référence à la figure 3, le contrôleur 60 peut commander un pilote d'activation 60a de la tête d'impression 18, éventuellement intégré au contrôleur 60. Le pilote d'activation 60a est configuré pour envoyer à la tête d'impression 18, et plus particulièrement aux buses, un signal d'activation 61 qui peut comprendre, par exemple, un signal d'adressage des buses et un signal d'activation en puissance. Le signal d'adressage identifie les buses devant projeter une goutte et le signal de puissance apporte la puissance électrique pour l'activation des buses.

Le dispositif de comptage 40 peut, en première approche, utiliser le signal d'activation 61 pour déterminer quelles buses ont projeté du liant, et donc connaître le nombre théorique de gouttes de liant projetées par la tête d'impression 18. A cet effet, le détecteur 44 peut prendre en entrée le signal d'activation 61.

Toutefois, grâce au fait que le dispositif de comptage 40 comprend ici un moyen optique 42 comme décrit ci-dessus, il est possible de connaître non seulement le nombre théorique de gouttes de liant projetées mais surtout le nombre de gouttes de liant réellement et effectivement projetées par la tête d'impression 18. Le cas échéant, le dispositif de comptage 40 peut donc confirmer ou corriger un comptage réalisé à partir d'un signal d'activation de la tête d'impression 18 sur la base de la détection optique du passage des gouttes à travers le moyen optique 42.

Dans tous les cas, un procédé de fabrication additive indirecte dont un exemple a été présenté en référence à la figure 1 peut comprendre un comptage des gouttes de liant projetées. Ce comptage peut être réalisé par le dispositif de comptage 40, par exemple au cours de la projection des gouttes.

Le dispositif de comptage 40 peut être configuré pour déterminer le positionnement des gouttes de liant projetées par la tête d'impression 18 sur les lits de poudre 14. La détermination du positionnement des gouttes peut comprendre le suivi de la position de la tête d'impression 18 dans l'espace et l'identification, via le signal d'activation, de la ou des buses(s) active(s). Les buses étant fixes par rapport à la tête d'impression 18, en connaissant la position de cette dernière, il est possible de remonter à la position de la goutte dans l'espace.

Plus précisément, selon un exemple illustré sur la figure 3, le contrôleur 60 peut commander un pilote de positionnement 60b de la tête d'impression 18, éventuellement intégré au contrôleur 60. Le pilote de positionnement 60b est configuré pour positionner la tête d'impression 18 par rapport au support, par exemple en envoyant à des actionneurs MX, MY, MZ (ici des moteurs gérant la translation de la tête d'impression selon les directions X, Y, Z respectivement) des signaux de positionnement 61X, 61Y, 61Z respectivement. Les signaux de positionnement 61X, 61Y, 61Z peuvent être donnés en entrée à une unité de localisation 46 qui peut, sur cette base, déterminer le positionnement de la tête d'impression 18, voire de chacune des buses.

Afin de corréler le positionnement de la tête d'impression et le comptage des gouttes, une synchronisation temporelle 47 peut être réalisée entre le détecteur 44 et l'unité de localisation 46. Le détecteur 44 peut ainsi renvoyer une information relative aux gouttes émises à chaque instant, tandis que l'unité de localisation 46 peut renvoyer une information relative à la position de la tête d'impression 18 à chaque instant. En croisant ces informations, le dispositif de comptage 40 peut retourner une information 48 relative à la position d'impression de chaque goutte.

Par ailleurs, comme indiqué précédemment, le moyen optique 42 a pour rôle de confirmer la projection d'une goutte. Dans le cas d'une buse bouchée, le signal sera identifié mais la goutte ne sera pas projetée. Ainsi, la combinaison du suivi de position de la tête d'impression 18 et du signal d'activation 61, voire du moyen optique 42, permet de déterminer le positionnement des gouttes de liant projetées par la tête d'impression.

Optionnellement, l'installation 10 peut comprendre un nettoyeur de buse 50. Le nettoyage d'une ou plusieurs buses de la tête d'impression 18 peut être fait de manière périodique, par exemple toutes les N couches imprimées, selon un paramétrage donné, ou à la demande. Le nettoyeur de buse 50 peut comprendre un racleur, par exemple similaire à un essuie-glace, configuré pour racler le liant séché à la sortie des buses, et/ou forcer dans les buses de la tête d'impression 18 un liquide nettoyant, comprenant typiquement des solvants du liant 16, permettant de dissoudre le liant séché à l'intérieur d'une ou plusieurs buses de la tête d'impression 18. Cette application de solvants peut être réalisée au-dessus d'un bac de récupération du liquide nettoyant.

En particulier, lorsque le dispositif de comptage 40 détecte qu'une buse donnée reçoit un signal d'activation 61, mais ne détecte pas de passage de goutte à travers le moyen optique 42 associée à cette buse, le dispositif de comptage 40 peut émettre un signal de bouchage 52 indiquant que cette buse est bouchée. L'émission d'un signal de bouchage 52 peut entraîner le nettoyage, par le nettoyeur de buse 50, de la buse considérée, voire de plusieurs buses, voire de toute la tête d'impression 18. Dans le cas d'un nettoyage de toute la tête d'impression 18, il est possible d'attendre qu'une certaine configuration de buses bouchées soit détectée pour émettre un signal de bouchage 52, par exemple une proportion de buses bouchées supérieure à un seuil ou une concentration spatiale de buses bouchées.

Par ailleurs, le contrôleur 60 peut notamment comprendre une unité d'évaluation 62 des dimensions d'une pièce imprimée, et une unité de calcul 64 de la saturation en liant du lit de poudre. Ces unités seront décrites ci-après. On note d'ores et déjà que dans le cas où les buses se bouchent au cours de l'impression, le nombre de gouttes mesuré par le dispositif de comptage 40 (le moyen optique) diminuera, donc le volume de liant projeté baissera, ainsi que la saturation. Cela permet de déceler une saturation trop basse sur la base d'un défaut d'impression.

Le fonctionnement de la tête d'impression 18 est illustré sur la figure 4, où l'on voit la tête d'impression 18 qui se déplace au-dessus d'un lit de poudre 14. La tête d'impression 18 imprime en se déplaçant dans la direction Y. Par ailleurs, l'espacement entre deux buses adjacentes de la tête d'impression 18, dans la direction X, est noté Xb. Afin de projeter une quantité suffisante de liant, il peut être nécessaire d'effectuer plusieurs passes d'impression sur une même couche, en décalant la tête d'impression d'une distance dX dans la direction X. La distance dX représente donc l'espacement entre les centres de deux gouttes adjacentes dans la direction X.

Ainsi, la tête d'impression peut imprimer les gouttes 16a1, 16a2, 16a3, etc. lors de son déplacement dans la direction Y, puis revenir à sa position initiale, se décaler de la distance dX dans la direction X puis reprendre un déplacement selon la direction Y pour imprimer les gouttes 16b1, 16b2, et ainsi de suite. Sur la figure 4, seule une partie de ces gouttes a été représentée par souci de lisibilité.

On appelle bande d'impression, de largeur Xb, la zone d'impression parcourue par une même buse, en plusieurs passes. L'espacement dX des gouttes selon X peut donc s'exprimer en fonction de la largeur d'une bande d'impression et du nombre de passes Np de la tête d'impression 18 sur le lit de poudre 14, selon la formule dX=Xb/Np. Par ailleurs, l'espacement dY entre les centres de deux gouttes adjacentes dans la direction Y varie avec la vitesse Vy de déplacement de la tête d'impression 18 selon Y, et la fréquence d'activation f des buses de la tête d'impression, selon la formule dY=Vy/f. Si on note par ailleurs Z la hauteur de la pièce et dZ la hauteur d'une couche ou du lit de poudre selon l'axe Z, le nombre de couches (ou de lits de poudre) Nc est donné par Nc=Z/dZ.

Dans certains modes de réalisation, l'espacement dX peut être supérieur au diamètre médian d50 de la poudre pour obtenir une bonne infiltration du liant. Par ailleurs, l'espacement dX peut être inférieur à la largeur Xb.

Par ailleurs, le volume d'une goutte Vg est considéré comme connu car il peut être mesuré par des méthodes connues de l'homme du métier, par exemple le test dit du buvard. Ce test comprend la projection d'un nombre fixe de gouttes sur un papier buvard. La différence de masse de ce papier buvard avant et après la projection des gouttes donne la masse de liant projeté. La division de cette masse de liant par le nombre de gouttes connu, permet d'accéder à la masse d'une goutte de liant. La masse volumique du liant étant connue ou mesurée par pycnomètre liquide, il est donc possible de remonter au volume d'une goutte de liant.

On note, pour une couche donnée, $N_{g,X}$ le nombre de gouttes imprimées dans la direction X et $N_{g,Y}$ le nombre de gouttes imprimées dans la direction Y. Le nombre total de gouttes imprimées d'une couche donnée, noté $N_g$, est donc égal à $N_g = N_{g,X}.N_{g,Y}$ et théoriquement égal à $\frac{X_{imp}}{dX} \cdot \frac{Y_{imp}}{dY}$, où $X_{imp}$ et $Y_{imp}$ sont respectivement les dimensions selon X et selon Y de la pièce imprimée. Ces dimensions $X_{imp}$ et $Y_{imp}$ ne sont pas mesurables mais peuvent être approchées par calcul.

Comme indiqué précédemment, l'installation 10 comprend une unité d'évaluation 62 des dimensions de la pièce imprimée. En effet, il peut exister une différence de dimensions entre la pièce à imprimer définie par CAO (typiquement définie par un fichier d'instructions de l'installation de fabrication additive) et la pièce effectivement imprimée. Les dimensions de la pièce définie par CAO selon les directions X, Y et Z peuvent être notées respectivement $X_{CAO}$, $Y_{CAO}$ et $Z_{CAO}$. A l'étape d'impression, les dimensions de la pièce imprimée selon les directions X, Y et Z peuvent s'exprimer comme suit :

$$X_{imp} = N_{g,X} \cdot dX$$

$$Y_{imp} = N_{g,Y} \cdot dY$$

$$Z_{imp} = Nc \cdot dZ$$

Ces dimensions sont inconnues et difficiles à mesurer : on connaît leur valeur théorique donnée par le fichier CAO, mais leur valeur réelle dévie de cette valeur théorique en raison du débordement des gouttes par rapport au contour du fichier CAO, ce débordement étant lui-même lié à l'étalement des gouttes sur le lit de poudre et au recouvrement éventuel de gouttes entre elles. Une ou plusieurs gouttes peut donc déborder du contour de la pièce dite pièce CAO (c'est-à-dire la pièce telle que définie par le fichier CAO), en fonction du nombre de passes Np de la tête d'impression 18 ou encore de la saturation en liant demandé à l'installation (saturation machine).

Après réticulation du liant, les dimensions de la pièce réticulée selon les directions X, Y et Z, notées respectivement $X_{ret}$, $Y_{ret}$ et $Z_{ret}$, sont mesurables et peuvent être confrontées aux dimensions de la pièce CAO. Le changement dimensionnel de la pièce réticulée par rapport à la pièce CAO, selon la direction X, noté $\Delta X_{ret}^{CAO}$, peut s'exprimer comme

$$\frac{\Delta X_{ret}^{CAO}}{X_{CAO}} = \frac{X_{ret} - X_{CAO}}{X_{CAO}}$$

Des relations identiques peuvent s'écrire pour les directions Y et Z. Les dimensions de la pièce réticulée peuvent être mesurées physiquement sur la pièce à vert 24.

Lors du déliantage, on suppose qu'aucune variation dimensionnelle de la pièce n'a lieu par rapport à la pièce réticulée. Les dimensions de la pièce déliantée sont délicates à mesurer en raison de sa très faible tenue mécanique.

Cependant, il est possible d'entreprendre un pré-frittage de la pièce déliantée à une température intermédiaire inférieure à la température de densification afin d'engendrer des cous de matière à la place des ponts de polymère et ainsi consolider la pièce, ce qui permet de mesurer les dimensions de la pièce pré-frittée selon les directions X, Y et Z, notées respectivement $X_{cous}$, $Y_{cous}$ et $Z_{cous}$, légèrement inférieures aux dimensions de la pièce réticulée, et a fortiori de la pièce CAO. Le retrait de la pièce pré-frittée par rapport à la pièce réticulée, selon la direction X, noté $\Delta X_{cous}^{ret}$, peut s'exprimer comme

$$\frac{\Delta X_{cous}^{ret}}{X_{ret}} = \frac{X_{cous} - X_{ret}}{X_{ret}}$$

En revanche, un net retrait se produit lors du frittage de densification (à bien plus haute température que celle du pré-frittage). Après frittage, les dimensions de la pièce frittée (devenue dense) selon les directions X, Y et Z, notées respectivement $X_{frit}$, $Y_{frit}$ et $Z_{frit}$, sont inférieures aux dimensions de la pièce pré-frittée ou réticulée, et a fortiori de la pièce CAO. Le retrait de la pièce frittée par rapport à la pièce pré-frittée, selon la direction X, noté $\Delta X_{frit}^{cous}$, peut s'exprimer comme

$$\frac{\Delta X_{frit}^{cous}}{X_{cous}} = \frac{X_{frit} - X_{cous}}{X_{cous}}$$

Des relations identiques peuvent s'écrire pour les directions Y et Z. Les dimensions de la pièce frittée peuvent être mesurées physiquement sur la pièce finale 30 (avant parachèvement, le cas échéant). Par suite, les valeurs $\Delta X_{frit}^{ret}$ et $\Delta X_{frit}^{CAO}$ peuvent également être obtenues par calcul à partir des valeurs mesurées.

En combinant les équations ci-dessus, on obtient, dans la direction X, les relations suivantes (qui ne font intervenir que des valeurs accessibles par mesure) :

$$\frac{\Delta X_{frit}^{ret}}{X_{ret}} = \left(\frac{\Delta X_{frit}^{cous}}{X_{cous}} + 1\right) \cdot \left(\frac{\Delta X_{cous}^{ret}}{X_{ret}} + 1\right) - 1 = \left(\frac{X_{frit}}{X_{cous}}\right) \cdot \left(\frac{X_{cous}}{X_{ret}}\right) - 1$$

$$\frac{\Delta X_{frit}^{CAO}}{X_{CAO}} = \left(\frac{\Delta X_{frit}^{cous}}{X_{cous}} + 1\right) \cdot \left(\frac{\Delta X_{cous}^{ret}}{X_{ret}} + 1\right) \cdot \left(\frac{\Delta X_{ret}^{CAO}}{X_{CAO}} + 1\right) - 1$$

$$= \left(\frac{X_{frit}}{X_{cous}}\right) \cdot \left(\frac{X_{cous}}{X_{ret}}\right) \cdot \left(\frac{X_{ret}}{X_{CAO}}\right) - 1$$

Selon l'objectif poursuivi, cette relation peut être réécrite de différentes façons. Par exemple, si l'objectif est de déterminer les déformations et changements dimensionnels étape par étape, il est possible de réintroduire les dimensions de la pièce imprimée ; on rappelle en revanche que, contrairement aux dimensions de la pièce CAO, réticulée, pré-frittée et frittée qui peuvent être mesurées, les dimensions de la pièce imprimée ne sont qu'estimées :

$$\frac{\Delta X_{frit}^{CAO}}{X_{CAO}} = \left(\frac{X_{frit}}{X_{cous}}\right) \cdot \left(\frac{X_{cous}}{X_{ret}}\right) \cdot \left(\frac{X_{ret}}{X_{imp}}\right) \cdot \left(\frac{X_{imp}}{X_{CAO}}\right) - 1$$

Inversement, si l'objectif consiste plutôt à contre-déformer la pièce CAO de manière à obtenir une pièce frittée directement aux dimensions souhaitées, alors la relation s'écrit plus simplement :

$$\frac{\Delta X_{frit}^{CAO}}{X_{CAO}} = \left(\frac{X_{frit}}{X_{CAO}}\right) - 1$$

Bien entendu, tout niveau intermédiaire entre l'écriture la plus développée et l'écriture la plus concise peuvent être utilisés. Connaissant ces dimensions, il est possible de mieux dimensionner le fichier CAO gouvernant l'impression, pour toutes les poudres et tous les liants souhaités, afin d'obtenir directement une pièce finale frittée aux bonnes dimensions.

Par ailleurs, la relation donnant la dimension $X_{imp}$ fait intervenir le nombre de gouttes de liant projetées dans la direction X, $N_{g,X}$. Le dispositif de comptage 40 des gouttes de liant projetées théoriquement permet donc d'accéder à la connaissance des dimensions de la pièce imprimée, voire, sur cette base, d'estimer la saturation en liant de la pièce, notamment car cette saturation gouverne la résistance mécanique de la pièce à vert 24. La saturation est définie comme le rapport entre le volume de liant imprimé et le volume de pores partiellement ou totalement infiltrés par ce liant. L'impression de liant étant effectuée couche par couche, on s'intéresse à la saturation à l'échelle d'une couche.

On appelle surface élémentaire de référence SER le produit dX.dY, et volume élémentaire de référence VER le produit dX.dY.dZ. La surface élémentaire de référence représente une unité de surface occupée par une goutte. Toutefois, la surface élémentaire de référence SER ainsi définie suppose que deux gouttes adjacentes sont exactement tangentes, sans espace entre les deux ni chevauchement, ce qui ne correspond pas nécessairement à la réalité, surtout si on vise une saturation très basse (peu de liant) ou très haute (beaucoup de liant).

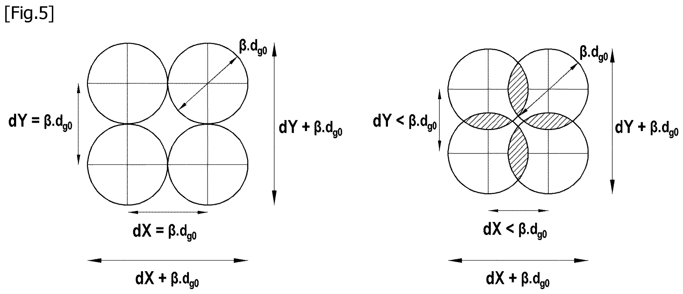

Dans cette perspective, les inventeurs ont mis au point un modèle à quatre gouttes illustré sur la figure 5. Dans ce modèle, on suppose l'impression de quatre gouttes dont les centres respectifs occupent les sommets d'un rectangle de longueur dX dans la direction X et de largeur dY dans la direction Y. Afin de connaître la surface réelle occupée par les gouttes sur le lit de poudre, il faut tenir compte d'un coefficient d'étalement $\beta$ positif, tel que la surface réelle occupée par les quatre gouttes soit inscrite dans un rectangle de longueur dX+$\beta.d_{g0}$ dans la direction X et de largeur dY+$\beta.d_{g0}$ dans la direction Y, où $d_{g0}$ est le diamètre de la goutte en vol.

Le coefficient d'étalement $\beta$ peut être déterminé expérimentalement, par exemple par analyse d'image enregistrée à la caméra rapide. Selon un mode opératoire possible, une goutte créée avec une seringue est déposée sur un lit de poudre. L'interaction entre la goutte et le lit de poudre est intégralement filmée à la caméra rapide (fréquence d'acquisition d'image de l'ordre de 2 kHz) afin de voir chacune des étapes : impact de la goutte sur le lit de poudre, mouillage de la poudre par la goutte, étalement de la goutte et infiltration de la goutte dans le lit de poudre. Le coefficient d'étalement $\beta$ est alors obtenu en comparant le diamètre d'étalement de la goutte à un instant t et le diamètre de la goutte en vol (c'est-à-dire le diamètre de la goutte avant infiltration sans étalement).

Sur la base de la surface élémentaire de référence, la saturation corrigée $S_{corr}$ de la couche peut être approximée par la relation suivante, faisant intervenir le nombre de gouttes mesuré Ng par le dispositif de comptage 40 :

$$S_{corr} = \frac{V_g \cdot Ng}{X_{imp}.Y_{imp}.dZ_{imp}.Pt}$$

où Pt est la porosité du lit de poudre sur lequel on imprime le liant (donc après passage éventuel du moyen d'étalement 34 et/ou de compaction), qui peut être mesurée expérimentalement par des techniques connues en elles-mêmes de l'homme du métier. Plus précisément, Pt est la porosité du volume imprimé $V_{imp=}X_{imp}.$ $Y_{imp}.$ $dZ_{imp}$ (en faisant abstraction du liant). Selon un exemple, la porosité du lit de poudre peut valoir entre 40 et 55%.

Là encore, on note que le calcul de la saturation corrigée fait intervenir le nombre de gouttes de liant projetées, $N_g$. Le dispositif de comptage 40 des gouttes de liant projetées théoriquement ou, mieux, effectivement, permet donc d'approximer la saturation vraie. L'unité de calcul 64 est donc configurée pour calculer la saturation en liant du lit de poudre en fonction du nombre de gouttes comptées, voire, le cas échéant, du nombre de gouttes dont le passage est détecté. Connaissant cette saturation corrigée, il est possible de régler la tête d'impression 18 en fonction de cette saturation corrigée, notamment d'ajuster les distances dX et dY entre deux gouttes (via le nombre de passes Np et la fréquence d'activation f, par exemple), pour obtenir la saturation corrigée désirée. Il s'ensuit une meilleure qualité de la pièce produite.

Le contrôleur 60 peut avoir l'architecture matérielle d'un ordinateur. Il peut notamment comporter notamment un processeur, une mémoire morte, une mémoire vive, une mémoire non volatile et des moyens de communication avec le reste de l'installation 10, notamment la tête d'impression 18, le dispositif de comptage 40 et/ou le nettoyeur de buse 50, permettant au contrôleur 60 d'envoyer ou recevoir des signaux vers ces éléments.

Bien que la présente description se réfère à des exemples de réalisation spécifiques, des modifications peuvent être apportées à ces exemples sans sortir de la portée générale de l'invention telle que définie par les revendications. Par exemple, bien que les différents composants de l'installation 10 aient été décrits comme capables de se déplacer dans certaines directions favorisant la compacité de l'installation 10, d'autres directions de déplacement sont envisageables pour tout ou partie de ces composants, dès lors qu'ils restent aptes à remplir leurs fonctions respectives. En outre, des caractéristiques individuelles des différents modes de réalisation illustrés ou mentionnés peuvent être combinées dans des modes de réalisation additionnels. Par conséquent, la description et les dessins doivent être considérés dans un sens illustratif plutôt que restrictif.

**Revendications**

1. Installation (10) de fabrication additive indirecte par projection de liant (16) sur lit de poudre (14), comprenant un support (12), un moyen d'approvisionnement en poudre (32) configuré pour former des lits de poudre (14) successifs sur le support (12), une tête d'impression (18) configurée pour projeter sélectivement du liant (16) sur chacun des lits de poudre (14) successifs, et un dispositif de comptage (40) des gouttes de liant (16) projetées par la tête d'impression (18) sur les lits de poudre (14), le dispositif de comptage (40) comprenant un moyen optique configuré pour détecter optiquement le passage de gouttes entre la tête d'impression (18) et le lit de poudre (14).

2. Installation de fabrication additive indirecte selon la revendication 1, dans laquelle le dispositif de comptage (40) est configuré pour déterminer le positionnement des gouttes de liant (16) projetées par la tête d'impression (18) sur les lits de poudre (14).

3. Installation de fabrication additive indirecte selon la revendication 1 ou 2, dans laquelle le dispositif de comptage (40) est configuré pour prendre en entrée un signal d'activation de la tête d'impression (18).

4. Installation de fabrication additive indirecte selon l'une quelconque des revendications 1 à 3, dans laquelle le dispositif de comptage (40) est configuré pour corriger un comptage réalisé à partir d'un signal d'activation de la tête d'impression (18) sur la base de la détection optique du passage des gouttes.

5. Installation de fabrication additive indirecte selon l'une quelconque des revendications 1 à 4, dans laquelle le moyen optique comprend au moins l'un parmi une nappe laser, un scanner et un ensemble de diodes.

6. Installation de fabrication additive indirecte selon l'une quelconque des revendications 1 à 5, comprenant en outre un nettoyeur de buse (50) configuré pour nettoyer au moins une buse de la tête d'impression (18) en fonction d'un signal de bouchage émis par le dispositif de comptage (40).

7. Installation de fabrication additive indirecte selon l'une quelconque des revendications 1 à 6, comprenant une unité d'évaluation (62) des dimensions d'une pièce imprimée par projection de liant en fonction du nombre de gouttes comptées.

8. Installation de fabrication additive indirecte selon l'une quelconque des revendications 1 à 7, comprenant une unité de calcul (64) de la saturation en liant du lit de poudre en fonction du nombre de gouttes comptées et optionnellement d'un coefficient d'étalement des gouttes.

9. Procédé de fabrication additive indirecte par projection de liant sur lit de poudre, comprenant la formation de lits de poudre (14) successifs sur un support (12), la projection sélective de liant (16) sur chacun des lits de poudre (14), le procédé comprenant en outre le comptage des gouttes de liant projetées, le comptage comprenant la détection optique du passage de gouttes entre la tête d'impression (18) et le lit de poudre (14).

10. Procédé de fabrication additive indirecte selon la revendication 9, dans lequel la projection sélective de liant (16) est effectuée par une tête d'impression (18), et comprenant le réglage de la tête d'impression (18) en fonction d'une saturation en liant (16) du lit de poudre (14) calculée en fonction du nombre de gouttes comptées.

[Fig.1]

[Fig.2]

[Fig.3]

[Fig.4]

[Fig.5]

Europäisches
Patentamt

European
Patent Office

Office européen
des brevets

# RAPPORT DE RECHERCHE EUROPEENNE

Numéro de la demande

EP 24 20 9608

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2008/252682 A1 (HERNANDEZ ANDRES TOMAS [US] ET AL) 16 octobre 2008 (2008-10-16) | 1-6,9 | INV. B22F10/14 |
| A | * alinéa [0003] * | 7,8,10 | B22F3/10 |
| | * figure 1 * | | B22F10/85 |
| | * alinéa [0115] * | | B22F12/90 |
| | * alinéa [0008] * | | B33Y10/00 |
| | * alinéa [0116] * | | B33Y30/00 |
| | * alinéas [0115], [0040] - [0043], [0075], [0008] * | | B33Y50/02 |
| | ----- | | |
| A | YANG GUO: "Inkjet and inkjet-based 3D printing: connecting fluid properties and printing performance", RAPID PROTOTYPING JOURNAL, vol. 23, no. 3, 18 avril 2017 (2017-04-18) , pages 562-576, XP093167656, GB ISSN: 1355-2546, DOI: 10.1108/RPJ-05-2016-0076 * alinéa [0001]; figure 2(c) * | 1,9 | |
| | ----- | | **DOMAINES TECHNIQUES RECHERCHES (IPC)** |
| A | NIRANJAN D. PARAB ET AL: "Real time observation of binder jetting printing process using high-speed X-ray imaging", SCIENTIFIC REPORTS, vol. 9, no. 1, 21 février 2019 (2019-02-21), XP055752792, DOI: 10.1038/s41598-019-38862-7 * abrégé * | 1,9 | B22F B33Y B29C |
| | ----- | | |

Le présent rapport a été établi pour toutes les revendications

| Lieu de la recherche | Date d'achèvement de la recherche | Examinateur |
|---|---|---|
| La Haye | 7 février 2025 | Mensink, Rob |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................
& : membre de la même famille, document correspondant

EPO FORM 1503 03.82 (P04C02)

**EP 4 549 057 A1**

## ANNEXE AU RAPPORT DE RECHERCHE EUROPEENNE
## RELATIF A LA DEMANDE DE BREVET EUROPEEN NO.

EP 24 20 9608

07-02-2025

| Document brevet cité au rapport de recherche | Date de publication | Membre(s) de la famille de brevet(s) | Date de publication |
|---|---|---|---|
| US 2008252682 A1 | 16-10-2008 | CN 101056766 A | 17-10-2007 |
| | | EP 1805024 A2 | 11-07-2007 |
| | | JP 5243030 B2 | 24-07-2013 |
| | | JP 2008513199 A | 01-05-2008 |
| | | KR 20070083737 A | 24-08-2007 |
| | | US 2006061618 A1 | 23-03-2006 |
| | | US 2008252682 A1 | 16-10-2008 |
| | | WO 2006033903 A2 | 30-03-2006 |